# EUROPEAN PATENT APPLICATION

(11) **EP 1 011 225 A1**
(43) Date of publication of application: **21.06.2000**
(21) Application number: 99923938.7
(22) Date of filing: 07.06.1999
(51) Int. Cl.: H04L 12/28, H04L 12/46, H04L 12/56

(54) **METHOD OF NETWORK MANAGEMENT AND METHOD OF SELECTION OF NETWORK MANAGER**

(30) Priority: 08.06.1998 JP 15935098
(71) Applicant: Sony Corporation, Tokyo 141-0001 (JP)
(72) Inventor: HIRAIWA, Hisaki Sony Corporation, Tokyo 141-0001 (JP); SHIMA, Hisato Sony US Research Laboratories, San Jose, CA 95134-1940 (US)
(74) Representative: Ayers, Martyn Lewis Stanley
(86) International application number: JP9903028
(87) International publication number: WO9965191

(57) **Abstract**

In a network managing method for managing a network system 100 composed by connecting buses 111, 112, 113 connected with at least one node by first bridges 114, 115 to compose a sub-network 110, and connecting plural sub-networks 110, 120, 130, 140, 150 by second bridges 161 to 164, by a network manager selected from sub-network managers determined in respective sub-networks, at least the management of assigning each sub-network with an address is done, and also the management of setting the communication path among the respective sub-networks is executed, so that the management of network such as selection of network manager or the like can be done appropriately always in a specific state.

## Description

### TECHNICAL FIELD

The present invention relates to a network managing method for managing a network system composed by connecting a plurality of nodes by a specified transmission paths, and a selecting method for selecting a network manager for controlling the same.

### BACKGROUND ART

It is now a general practice to form a network system by connecting a multiplicity of computers, their peripherals, or video appliances and audio appliances or the like. The appliances to be controlled in such a system are called nodes, and the interface for connecting other appliances is incorporated therein.

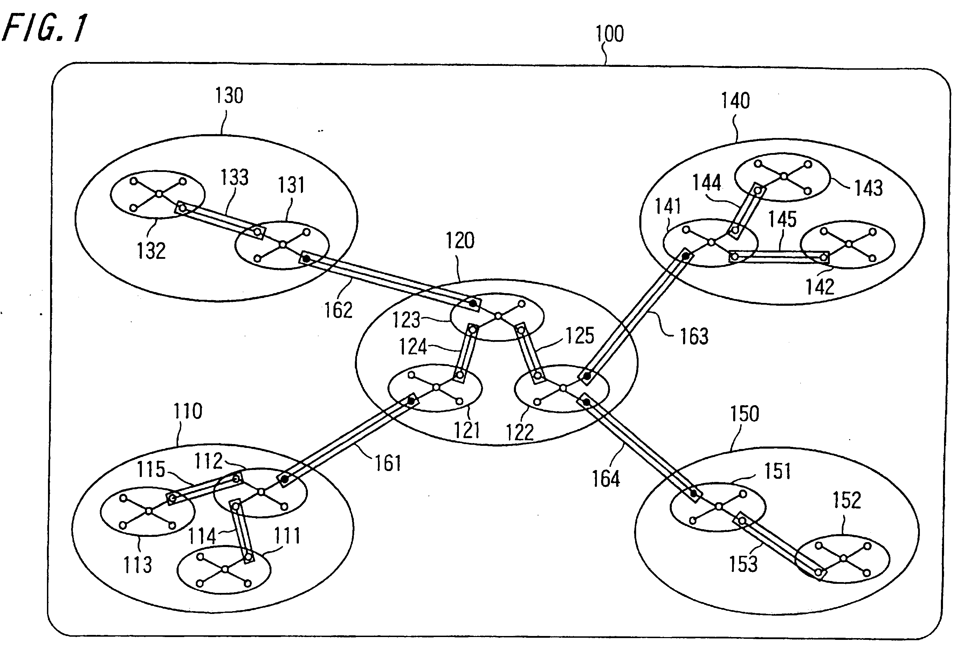

An example of such a network system configuration is shown in FIG. 1. This is a network system configuration conforming to the standard called an IEEE 1394-1995 interface (hereinafter called simply to as an IEEE 1394 interface). In the IEEE 1394 interface, the maximum number of nodes connected in one bus is defined to be 63. A small-size network system can be composed of a single bus alone. To connect more nodes, however, it is necessary to prepare plural buses and connect the buses through a bridge. In the standard of IEEE 1394 interface, the maximum number of buses in one network system is 1023.

In a network system 100 shown in FIG. 1, the above-mentioned bus is provided in each one of five sub-networks 110, 120, 130, 140, and 150. Herein, a bridge for connecting the buses in the sub-network is a first bridge, and a bridge for connecting adjacent networks is a second bridge.

The sub-network 110 is composed by including three buses 111, 112, and 113 formed by connecting plural nodes by, for example, communication control signal lines conforming to IEEE 1394. The bus 111 and bus 112 are connected with a first bridge 114, and the bus 112 and bus 113 are connected with a first bridge 115. The sub-network 120 is composed by including three buses 121, 122, and 123. The bus 121 and bus 123 are connected with a first bridge 124, and the bus 122 and bus 123 are connected with a first bridge 125.

The sub-network 130 is composed by including two buses 131 and 132. The bus 131 and bus 132 are connected with a first bridge 133. The sub-network 140 is composed by including three buses 141, 142, and 143. The bus 141 and bus 142 are connected with a first bridge 145, and the bus 141 and bus 143 are connected with a first bridge 144. The sub-network 150 is composed by including three buses 151, 152, and 153. These three buses 151, 152, 153 are connected with a first bridge 154.

Of these sub-networks, the sub-network 110 and sub-network 120 are connected with a second bridge 161, the sub-network 120 and sub-network 130 are connected with a second bridge 162, the sub-network 120 and sub-network 140 are connected with a second bridge 163, and the sub-network 120 and sub-network 160 are connected with a second bridge 164.

When a huge network system is constructed in this way by connecting plural sub-networks, it is necessary to select a node to be used as a network manager for controlling the entire network system, and control the transfer of data from each node to other nodes by the control of this node of the network manager. For example, the ID (address) of each bus in the network is set by the control of the network manager, and the transfer is controlled by using the bus ID.

Hitherto, in such a system, processing for selecting the network manager is constituted, in principle, so that any node may be used as the manager, for example, in the IEEE 1394 interface, and any one network manager is selected in a specified process conforming to the sequence of connection.

However, when the network manager is selected merely by the connection sequence, for example, if the bus connection in the network system is cut off temporarily due to some cause and a node for manager is selected again in the network, it is not guaranteed that the same node is selected again, but the node to become the manager may change every time, and the bus ID setting state or other control state may be changed. When the network system is thus composed, it is not preferred when the node selected as network manager is not always the same. In particular, as mentioned above, in the case of a large-scale network system having plural sub-networks, it is not preferred if the manager responsible for managing is not fixed.

### DISCLOSURE OF THE INVENTION

It is hence an object of the invention to manage the network, for example, to select the network manager always in a specific state when assembling a network system.

The first aspect of the invention relates to a network managing method for managing a network system composed by connecting buses having at least one node with a first bridge to form a sub-network, and connecting plural sub-networks with a second bridge, in which a network manager selected from sub-network managers specified in each one of the sub-networks at least manages to assign each sub-network with an address and manages to set communication path between sub-networks. Therefore, by selecting a network manager from the sub-network managers, and managing the network by the network manager, an efficient management can be realized by the network manager selected out of the sub-network managers.

The second aspect of the invention relates to the network managing method of the first aspect, in which the network manager is the one highest in the manager capability among the sub-network managers. Therefore, the optimum network manager can be selected.

The third aspect of the invention relates to the network managing method of the first aspect, in which each sub-network manager has a parameter showing the own manager capability, and identification data intrinsic to the appliance for composing the manager. Therefore, when selecting the network manager from the sub-network managers, it is possible to judge appropriately.

The fourth aspect of the invention relates to the network managing method of the second aspect, in which the process for selecting the one having the highest manager capability is to select one highest in the capability by comparing the parameters showing the own manager capabilities possessed by each sub-network manager. Therefore, by selecting the appropriate network manager on the basis of the manager capability, management by the network manager can be done at a high manager capability.

The fifth aspect of the invention relates to the network managing method of the fourth aspect, in which one sub-network manager is selected as the network manager by comparing the identification data intrinsic to each appliance in a specified state when the parameters showing the manager capability are identical. Therefore, the network manager can be selected and processed uniquely according to the intrinsic identification data.

The sixth aspect of the invention relates to the network managing method of the first aspect, in which management by the network manager is to select the sub-network manager highest in the capability as the network manager in communication between adjacent sub-networks. Therefore, at least when each sub-network is in a state ready for communication with adjacent sub-network, processing for selecting the network manager can be done within the network system, and the network manager can be selected even if not assigned with the address corresponding to each bus in the network system or the like.

The seventh aspect of the invention relates to the network managing method of the first aspect, in which a parameter showing the own manager capability and identification data intrinsic to the appliance for composing the manager are transmitted between adjacent sub-network managers. Therefore, a necessary rank can be determined for selecting the network manager by comparing the parameters and identification data between adjacent sub-network managers.

The eighth aspect of the invention relates to the network managing method of the seventh aspect, in which one sub-network manager is selected by comparing between two sub-network managers in transmission of the parameters and identification data between adjacent sub-network managers, other sub-network manager not selected inherits the parameter and identification data from the selected sub-network manager, and the subsequent comparison of adjacent sub-network parameters is based on the inherited data used as own parameter and identification data. Therefore, the process necessary for determining the network manager can be done efficiently by data transmission only between the adjacent sub-networks.

The ninth aspect of the invention relates to the network managing method of the seventh aspect, in which one sub-network manager is selected as the parent by comparing between two sub-network managers in transmission of the parameters and identification data between adjacent sub-network managers, and other sub-network manager not selected is regarded as the child. Therefore, the process for selecting the network manager can be done from the parent-child relation.

The tenth aspect of the invention relates to the network managing method of the ninth aspect, in which if the capability parameters and identification data of both sub-network managers are identical in the comparison, the data are assumed to be inherited from the same parent sub-network manager, and the parent-child relation is disregarded. Therefore, only by data transmission between adjacent sub-networks, only the specified sub-network manager can be selected.

The eleventh aspect of the invention relates to the network managing method of the tenth aspect, in which if the relation with one adjacent sub-network manager is parent, and there is no other adjacent sub-network manager, an end command is transmitted to the parent sub-network manager. Therefore, the end of selection process of network manager can be judged easily.

The twelfth aspect of the invention relates to the network managing method of the tenth aspect, in which if the relation with one adjacent sub-network manager is parent, and the relation with the remaining adjacent sub-network manager is indifferent to parent-child relation or child, and an end command is received from all children, an end command is transmitted to the parent sub-network manager. Therefore, the end of selection process of network manager can be judged easily.

The thirteenth aspect of the invention relates to the network managing method of the tenth aspect, in which if the relation with all adjacent sub-network managers is indifferent to parent-child relation or child, and an end command is received from all children, the own sub-network manager is judged to be the network manager. Therefore, only the specified node of the highest manager capability is automatically selected as the network manager.

The fourteenth aspect of the invention relates to the network managing method of the seventh aspect, comprising a first command for sending out a capacity parameter and intrinsic identification data as communication command in transmission between the adjacent sub-network managers, and demanding 1:1 comparison with an adjacent sub-network manager, and a second command for comparing in response to the first command, and reporting the result. Therefore, the adjacent sub-network managers can be compared and processed efficiently.

The fifteenth aspect of the invention relates to the network managing method of the fourteenth aspect, in which, in case having the first command and the second command, it is judged whether the second command is valid or not by setting a specified counter value and comparing between both sub-network managers of the set value. Therefore, it is easy to judge when handling the second command, which is the comparison result report, as valid data.

The sixteenth aspect of the invention relates to the network managing method of the thirteenth aspect, in which the sub-network manager judging itself to be network manager transmits a selection end command indicating selected as the network manager to all adjacent sub-networks, and the sub-network managers receiving the data indicating selection as the network manager transmits a selection end command to all adjacent child sub-network managers. Therefore, processing can be executed smoothly when the network manager is selected.

The seventeenth aspect of the invention relates to a selecting method of network manager for selecting a network manager for managing the entire network system, in a network system composed by connecting buses having at least one node with a first bridge to form a net-network, and connecting plural sub-networks with a second bridge, in which the network manager is selected from sub-network managers specified in each one of the sub-networks by a specified process. Therefore, since the network manager is selected among the sub-network managers, the network manager can be selected by processing between sub-network managers only, and efficient selection is realized.

The eighteenth aspect of the invention relates to the selecting method of network manager of the seventeenth aspect, in which the network manager selects the one highest in the manager capability among the sub-network managers. Therefore, an optimum network manager can be selected.

The nineteenth aspect of the invention relates to the selecting method of network manager of the seventeenth aspect, in which each sub-network manager has a parameter showing the own manager capability, and identification data intrinsic to the appliance for composing the manager, and select the network manager based on the parameter and identification data. Therefore, only the specified sub-network manager can be selected as the network manager.

The twentieth aspect of the invention relates to the selecting method of network manager of the eighteenth aspect, in which the process for selecting the one having the highest manager capability is to select one highest in the capability by comparing the parameters showing the own manager capabilities possessed by each sub-network manager. Therefore, an adequate network manager can be selected according to the manager capability.

The twenty-first aspect of the invention relates to the selecting method of network manager of the twentieth aspect, in which one sub-network manager is selected as the network manager by comparing the identification data intrinsic to each appliance in a specified state when the parameters showing the manager capability are identical. Therefore, the network manager can be selected uniquely according to the intrinsic identification data.

The twenty-second aspect of the invention relates to the selecting method of network manager of the seventeenth aspect, in which the network manager is selected by judging the sub-network manager of the highest capability in communication between adjacent sub-networks. Therefore, at least when each sub-network is ready to communicate with adjacent sub-networks, the network manager can be selected in the network system, and if, for example, address corresponding to each bus is not assigned in the network system, the network manager can be selected.

The twenty-third aspect of the invention relates to the selecting method of network manager of the seventeenth aspect, in which a parameter showing the own manager capability and identification data intrinsic to the appliance for composing the manager are transmitted between adjacent sub-network managers, and the sub-network manager appropriate as the network manager is judged. Therefore, the necessary ranks for determining the network manager can be decided appropriately.

The twenty-fourth aspect of the invention relates to the selecting method of network manager of the twenty-third aspect, in which one sub-network manager is selected by comparing between two sub-network managers in transmission of the parameters and identification data between adjacent sub-network managers, other sub-network manager not selected inherits the parameter and identification data from the selected sub-network manager, and the subsequent comparison of adjacent sub-network parameters is performed based on the inherited data used as own parameter and identification data. Therefore, necessary processing for determining the network manager can be done efficiently by data transmission between the adjacent sub-networks only.

The twenty-fifth aspect of the invention relates to the selecting method of network manager of the twenty-third aspect, in which one sub-network manager is selected as the parent by comparing between two sub-network managers in transmission of the parameters and identification data between adjacent sub-network managers, and other sub-network manager not selected is regarded as the child. Therefore, the network manager can be selected appropriately from the parent-child relation.

The twenty-sixth aspect of the invention relates to the selecting method of network manager of the twenty-fifth aspect, in which if the capability parameters and identification data of both sub-network managers are identical in the comparison, the data are assumed to be inherited from the same parent sub-network manager, and the parent-child relation is disregarded. Therefore, only the specified sub-network manager can be selected by data transmission between the adjacent sub-networks only.

The twenty-seventh aspect of the invention relates to the selecting method of network manager of the twenty-sixth aspect, in which if the relation with one adjacent sub-network manager is parent, and there is no other adjacent sub-network manager, an end command is transmitted to the parent sub-network manager. Therefore, the end of selecting process of network manager can be judged easily.

The twenty-eighth aspect of the invention relates to the selecting method of network manager of the twenty-sixth aspect, in which if the relation with one adjacent sub-network manager is parent, and the relation with the remaining adjacent sub-network manager is indifferent to parent-child relation or child, and an end command is received from all children, an end command is transmitted to the parent sub-network manager. Therefore, the end of selecting process of network manager can be judged easily.

The twenty-ninth aspect of the invention relates to the selecting method of network manager of the twenty-sixth aspect, in which if the relation with all adjacent sub-network managers is indifferent to parent-child relation or child, and an end command is received from all children, the own sub-network manager is selected to be the network manager. Therefore, only the specified node of the highest manager capability is automatically selected as the network manager.

### BRIEF DESCRIPTION OF DRAWINGS

FIG. 1 is a structural diagram showing an example of network system configuration according to an embodiment of the invention.
FIG. 2 is a block diagram showing an example of configuration of each node according to the embodiment of the invention.
FIG. 3 is a flowchart showing an example of network manager selecting process according to the embodiment of the invention.
FIG. 4 is an explanatory diagram showing one step of network manager selecting process state according to the embodiment of the invention.
FIG. 5 is an explanatory diagram showing one step of network manager selecting process state according to the embodiment of the invention.
FIG. 6 is an explanatory diagram showing one step of network manager selecting process state according to the embodiment of the invention.
FIG. 7 is an explanatory diagram showing one step of network manager selecting process state according to the embodiment of the invention.
FIG. 8 is an explanatory diagram showing one step of network manager selecting process state according to the embodiment of the invention.
FIG. 9 is an explanatory diagram showing one step of network manager selecting process state according to the embodiment of the invention.
FIG. 10 is an explanatory diagram showing one step of network manager selecting process state according to the embodiment of the invention.
FIG. 11 is an explanatory diagram showing one step of network manager selecting process state according to the embodiment of the invention.
FIG. 12 is an explanatory diagram showing one step of network manager selecting process state according to the embodiment of the invention.
FIG. 13 is an explanatory diagram showing one step of network manager selecting process state according to the embodiment of the invention.

### BEST MODE FOR CARRYING OUT THE INVENTION

An embodiment of the invention is described below while referring to the accompanying drawings.

In this embodiment, same as in the network system explained as a prior art, it is a network system composed by connecting multiple devices as nodes, such as a computer, its peripherals, or video appliances, audio appliances or the like, and it is composed as a network system conforming to the standard called the IEEE 1394 interface, and the basic configuration of the network system is as shown in FIG. 1, in which a large-scale network system is composed by installing plural sub-network systems in one network system. That is, buses connected with one or plural nodes are connected with a first bridge to compose a sub-network, and plural sub-networks are connected with a second bridge to set up a network system. In FIG. 1, buses are shown as transmission paths composed of physical signal lines, but a network system may be composed also of buses connected with wireless transmission path.

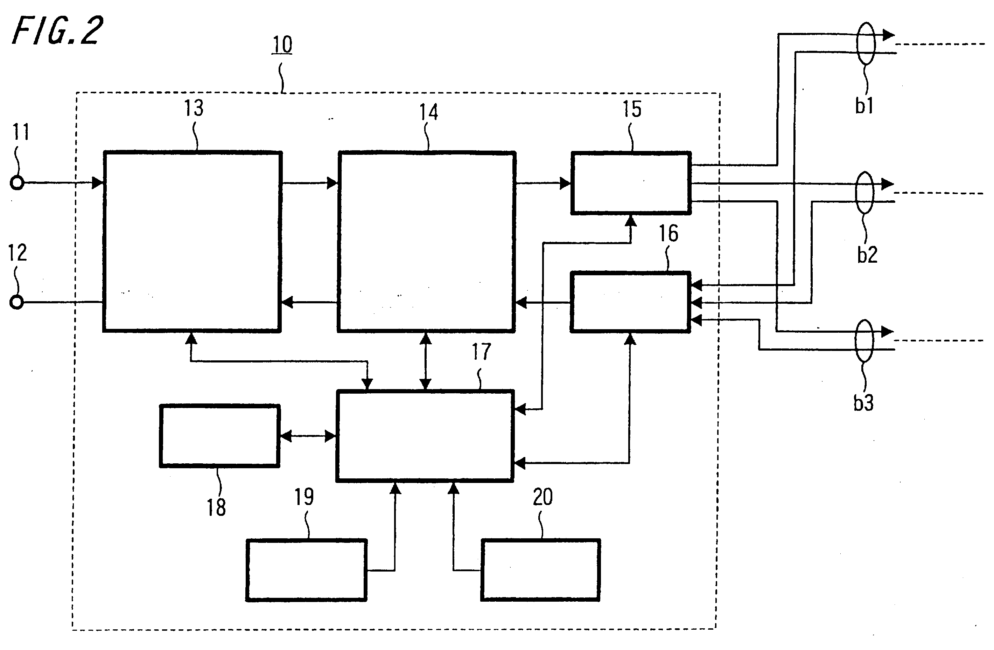

An example of constitution of each node for composing the network system is shown in FIG. 2, in which a transmission device 10 for composing each node comprises a data input terminal 11 and a data output terminal 12 for connecting with various devices, and the input terminal 11 and the output terminal 12 are connected to a data input and output interface 13. The data sent from the connected device (not shown) to the input terminal 11 is converted into a data composition for transmission in the data input and output interface 13, and supplied into a data processor 14, and after processing the data for transmission, the data is supplied into a transmitter 15 to be processed for transmission to be transmitted to a bus, and the data is sent out to any one of the connected buses (herein, any one of buses b1, b2, and b3).

The data sent from any one of the connected buses is received in a receiver 16, and the received data is supplied to the data input and output interface 13 through the data processor 14, and the data is processed for output, and supplied to the device connected to the output terminal 12. Also, when the data to be relayed by this node is received by the receiver 16, the received data is supplied from the data processor 14 to the transmitter 15, and is sent out to other bus.

These processes of transmission, reception and relaying are executed under the control of a controller 17. The controller 17 is also connected with a RAM 18 for storing the control process data. The controller 17 is also connected with a parameter memory unit 19 and an ID memory unit 20. The parameter memory unit 19 preliminarily stores the manager level value (for example, the level value corresponding to each version) showing the manager capability (management capability) of this transmission device. In this example, the higher the manager level value, it is set that the device has the higher manager capability. In the ID memory unit 20, the ID ( identification code) intrinsic to this transmission device is preliminarily stored in a specific number of bits. As the intrinsic ID, for example, the maker's code is stored in the upper bits and the product code and a serial number code are stored in the lower bits. AS an example of such ID, a 64-bit code called EUI (equipment unique ID) is known.

In this example, the controller 17 is designed to hold the count value by setting a necessary request counter and an effective count when processing to select the network manager.

The constitution shown in FIG. 2 is a constitution of a transmission device connected to the buses composed of transmission paths by physical signal lines, but when using wireless transmission paths, the transmitter and the receiver are responsible for wireless transmitting process and wireless receiving process.

When thus composed nodes are connected in the state as shown in FIG. 1, and a network system having plural sub-networks is composed, the process for selecting a network manager is explained below. Herein, the network manager is designed to manage at least the process of setting an ID (address) in each bus (bridge) in the network, and the process of setting the communication path, and by selecting the network manager, this network manager manages the network system, so that data can be transferred among respective nodes in the network system.

As the preliminary condition for selecting process of the network manager in this example, it is assumed, in each sub-network, that a sub-network manager or a node responsible for managing within the sub-network has been already determined. Even if the network manager is not determined yet (that is, the ID is not assigned to the bus), each sub-network manager is capable of transmitting (transferring) data to the sub-network manager of each sub-network adjacent to the own sub-network.

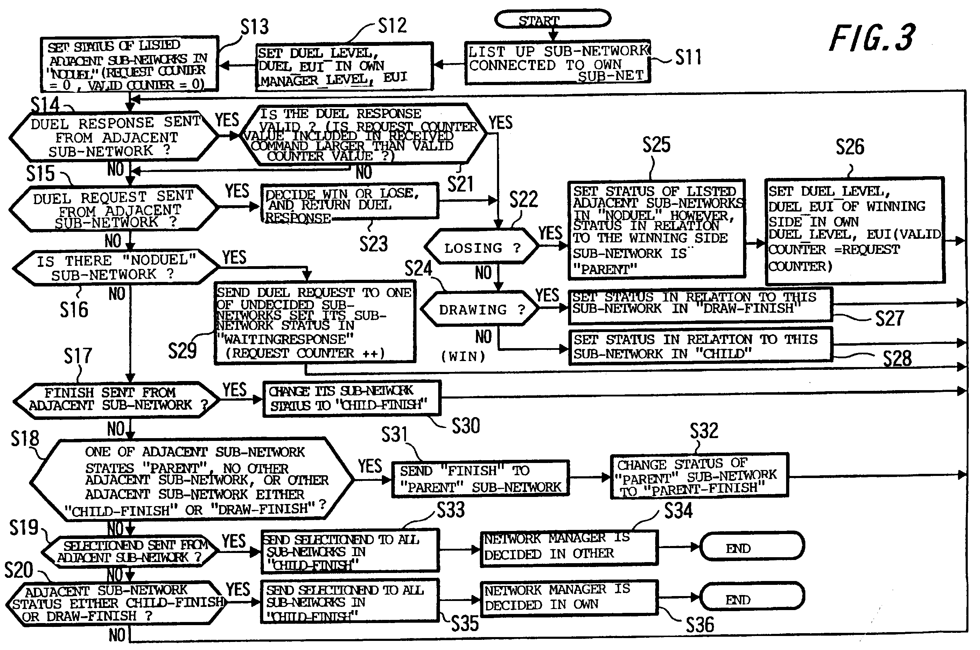

A flowchart in FIG. 3 shows the selecting process of the network manager in the embodiment. Prior to explaining the process according to the flowchart, the status possessed by each sub-network manager is described. That is, in this example, between two adjacent sub-network managers there is performed a comparison called Duel, and the following seven statues are set according to the Duel process (or the state before Duel process). These statues are stored and held, for example, in the RAM 18 of the transmission device shown in FIG. 2.

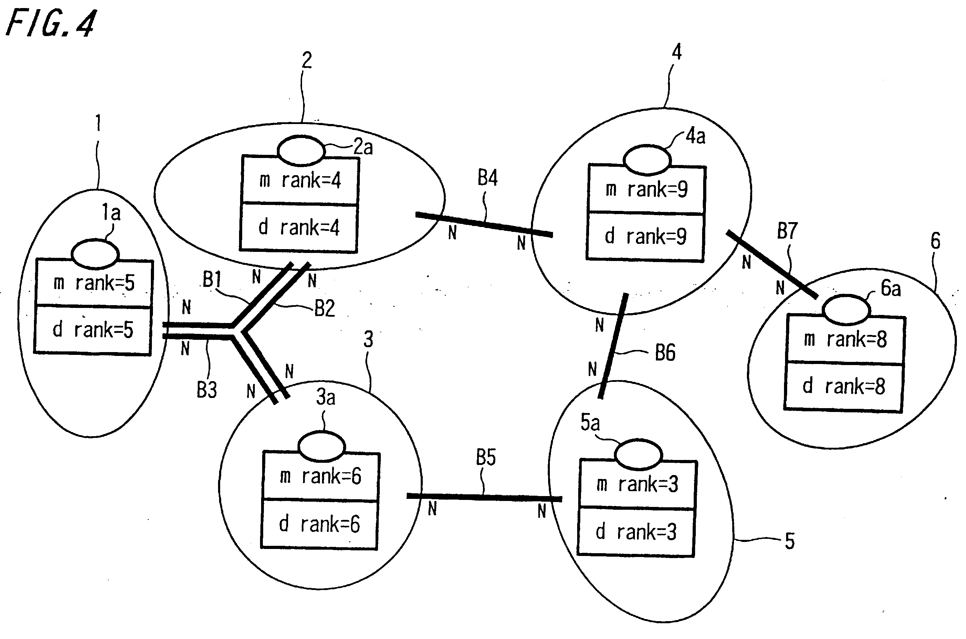

NoDuel: The state before Duel (comparison) with the adjacent sub-network manager. Also the state before transmission of Duel request command to the sub-network manager (this status is shown as N in FIG. 4 and after the same).

WaitingResponse: The state before Duel (comparison) with the adjacent sub-network manager. Also the state after transmission of Duel request command to the sub-network manager.

Child: The state of winning after Duel (comparison) with the adjacent sub-network manager, having the own Duel level and Duel EUI copied in this sub-network, and this sub-network becoming the own child. Also the state before receiving Finish command from this sub-network (this status is shown as C in FIG. 4 and after).

Parent: The state of losing after Duel (comparison) with the adjacent sub-network manager, having the Duel level and Duel EUI possessed by the sub-network copied in itself, and this sub-network becoming the own parent. Also the state before sending Finish command to the sub-network (this status is shown as P in FIG. 4 and after).

Child-Finish: The state of winning after Duel ( comparison) with the adjacent sub-network manager, having the own Duel level and Duel EUI copied in this sub-network, and this sub-network becoming the own child. Also the state after receiving Finish command from this sub-network (this status is shown as C-F in FIG. 4 and after).

Parent-Finish: The state of losing after Duel ( comparison) with the adjacent sub-network manager, having the Duel level and Duel EUI possessed by this sub-network copied in itself, and this sub-network becoming the own parent. Also the state after sending Finish command to this sub-network (this status is shown as P-F in FIG. 4 and after).

Draw-Finish: The state of drawing after Duel ( comparison) with the adjacent sub-network manager (this status is shown as D-F in FIG. 4 and after). This status occurs when there is a loop somewhere in the topology, and Duel level and Duel EUI possessed by one sub-network manager are transmitted through other route.

Concerning the Duel level and Duel EUI shown in this explanation of status, for example, the manager level value stored in the parameter memory unit 19 of the transmission device 10 is handled as the Duel level, and the ID stored in the ID memory unit 20 is used as the Duel EUI, and in the process of this embodiment, these data are stored in the RAM 18 in the transmission device 10, and the stored data in the RAM 18 are updated depending on the result of Duel.

Referring now to the flowchart in FIG. 3, the selecting process of network manager is sequentially described below. First, each sub-network manager lists up the sub-networks (managers of the sub-networks) connected to the own sub-network (step S11). Then, each sub-network manager sets the own Duel level and Duel EUI in the RAM of the transmission device for composing each sub-network manager (step S12). The state of each adjacent sub-network listed up at step S11 is set in the status of NoDuel. The value of the request counter set in the controller in the transmission device for composing the sub-network manager is set to 0, and the value of the valid counter is also set to 0 (step S13).

Next, it is judged whether Duel response is sent from the adjacent sub-network or not (step S14). If there is Duel response, this Duel response is judged valid or not (step S21). To judge whether the Duel response is valid or not, it is judged whether the value of the request counter included in the reception command is larger than the value of the valid counter set in the sub-network manager or not.

When judged there is no Duel response at step S14, and when Duel response is judged not valid at step S21, it is judged whether or not Duel request is sent from the adjacent sub-network (step S15). If there is Duel request, herein, the own Duel level and Duel EUI, and the Duel level and Duel EUI of the requesting sub-network manager are compared (Duel), and Duel response is sent back as the result (step S23).

When Duel response is judged valid at step S21, and when Duel response is sent back at step S23, it is judged whether winning or losing according to the result of Duel (step S22). If losing, the state of the adjacent sub-networks listed up at step S11 is set in the status of NoDuel. In this case, however, only the state in relation to the winning sub-network is set in the status of Parent (step S25). The Duel level and Duel EUI possessed by the winning sub-network are set in the RAM 18 as the own Duel level and Duel EUI. The value of the valid counter is set to the value of the request counter (step S26). After processing at this step S26, the process returns to the judgement at step S14.

If not losing at step S22, it is judged whether draw or not (step S24), and if drawing, the state in relation to the sub-network is set in the status of Draw-Finish (step S27). After processing at this step S27, the process returns to the judgement at step S14.

Further, if not drawing at step S24 (that is, winning), the state of this sub-network is set in the status of Child (step S28). After processing at this step S28, the process returns to the judgement at step S14.

If judged there is no Duel request from the adjacent sub-network at step S15, it is judged whether or not there is any adjacent sub-network in the status of NoDuel (step S16). Herein, if any one in the status of NoDuel is fond, Duel request command is sent to this one adjacent sub-network. The state in relation to this sub-network is set in the status of WaitingResponse. At the same time, one is added to the value of the request counter (step S29). After processing at this step S29, the process returns to the judgement at step S14.

If judged there is no Duel request from the adjacent sub-network at step S16, it is judged if Finish command is sent from adjacent sub-network or not (step S17). Herein, if Finish command is sent, the state of this sub-network is set in the status of Child-Finish (step S30). After processing at this step S30, the process returns to the judgement at step S14.

If judged Finish command is not sent at step S17, it is judged if any one of the adjacent sub-networks is in the status of Parent, and there is no other sub-network to be connected, or if other adjacent sub-network is in the status of Child-Finish or Draw-Finish (step S18). Herein, in the case of either status, Finish command is sent to the sub-network of Parent (S31), and the state of the sub-network of Parent is changed to the status of Parent-Finish (step S32). After processing at this step S32, the process returns to the judgement at step S14.

If not corresponding to the state judged at step S18, it is judged if SelectionEnd command is set from adjacent sub-network or not (step S19). Herein, if Finish command has been sent, SelectionEnd command is sent to all adjacent sub-networks in the status of Child-Finish (step S33), and it is judged that the network manager is determined in other sub-network manager (step S34), and the processing in this sub-network manager is terminated.

If judged there is no SelectionEnd command from adjacent sub-network at step S19, it is judged if the state of the adjacent sub-network is in the status of Child-Finish or Draw-Finish (step S20). In the case of either status, SelectionEnd command is sent to all adjacent sub-networks in the status of Child-Finish (step S35), and it is judged that the own sub-station manager is selected as the network manager (step S36), and the processing in this sub-network manager is terminated.

As the process shown in the flowchart in FIG. 3 is executed by each sub-network manager, the network manager can be selected in a form of completely eliminating the incidental coincidence within the network. Referring now to FIG. 4 and after the same, an example of processing of actually selecting the network manager in the process shown in this flowchart is described in detail.

In this example, as shown in FIG. 4, it is assumed that nine sub-networks 1 to 9 are connected with bridges B1 to B7, and one network system is constituted, and nodes 1a to 9a in the sub-networks 1 to 9 are already selected as sub-network managers. In the RAM of each sub-network manager, the manager level (herein called m rank value) stored in the parameter memory unit of the device for composing the node is set as Duel level (herein called d rank value).

Herein, the manager level value 5 is set as the Duel level value 5 in the sub-network manager 1a in the sub-network 1, the manager level value 4 is set as the Duel level value 4 in the sub-network manager 2a in the sub-network 2, the manager level value 6 is set as the Duel level value 6 in the sub-network manager 3a in the sub-network 3, the manager level value 9 is set as the Duel level value 9 in the sub-network manager 4a in the sub-network 4, the manager level value 3 is set as the Duel level value 3 in the sub-network manager 5a in the sub-network 5, and the manager level value 8 is set as the Duel level value 8 in the sub-network manager 6a in the sub-network 6. To simplify the explanation, herein, winning or losing is decided by comparing only the manager level in Duel process, but actually when Duel levels are matched, by using the specific ID (identification data) such as EUI or the like possessed by each sub-network manager, winning or losing is decided by comparing the magnitude by bit reversing of the data or the like.

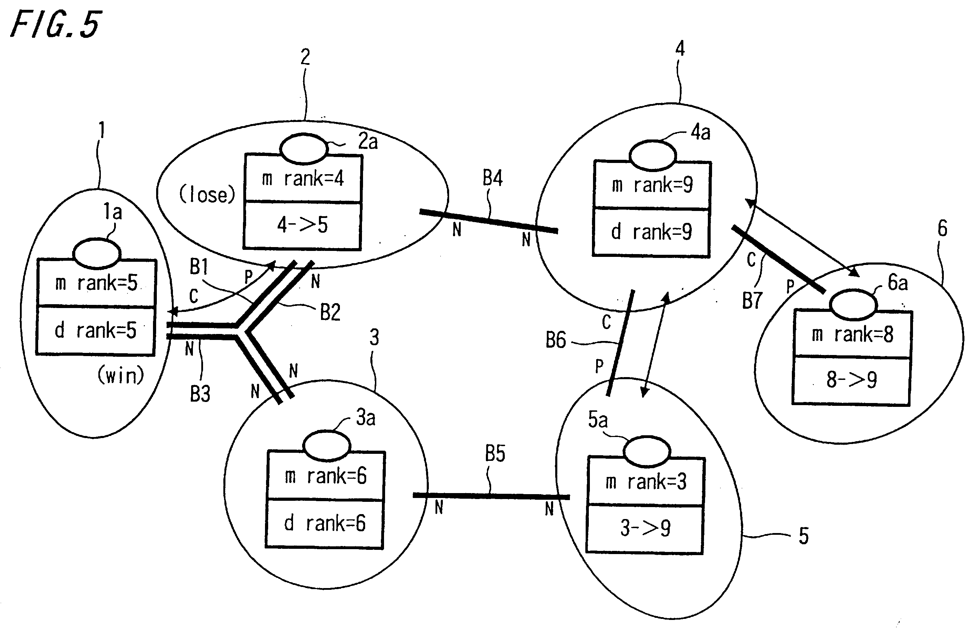

In the initial state shown in FIG. 4, the status of the sub-network managers connected with all the bridges B1 to B7 are NoDuel. In this state, each sub-network manager communicates with the adjacent sub-network connected with the bridge, compares between the adjacent sub-networks, which is called Duel process. In each figure of FIG. 5 and after the same, the position indicated by two-way arrow along each bridge shows the sub-networks subject to Duel process.

At the state shown in FIG. 5 which is the next step, Duel process between the sub-network manager 1a and the sub-network manager 2a is executed, and the sub-network manager 1a is higher in Duel level, and hence this sub-network manager 1a wins, and Child (C) is set as status. At the losing side sub-network manager 2a, Parent (P) is set. The Duel level value 4 of the losing side sub-network manager 2a is updated to the Duel level value 5 of the winning side sub-network manager 1a.

Similarly, Duel process between the sub-network manager 4a and the sub-network manager 5a shown in FIG. 5 is executed, and the sub-network manager 4a is higher in Duel level, and hence this sub-network manager 4a wins, and Child (C) is set as status. At the losing side sub-network manager 5a, Parent (P) is set. The Duel level value 3 of the losing side sub-network manager 5a is updated to the Duel level value 9 of the winning side sub-network manager 4a.

Further, Duel process between the sub-network manager 4a and sub-network manager 6a shown in FIG. 5 is executed, and the sub-network manager 4a is higher in Duel level, and hence this sub-network manager 4a wins, and Child (C) is set as status. At the losing side sub-network manager 6a, Parent (P) is set. The Duel level value 8 of the losing side sub-network manager 6a is updated to the Duel level value 9 of the winning side sub-network manager 4a.

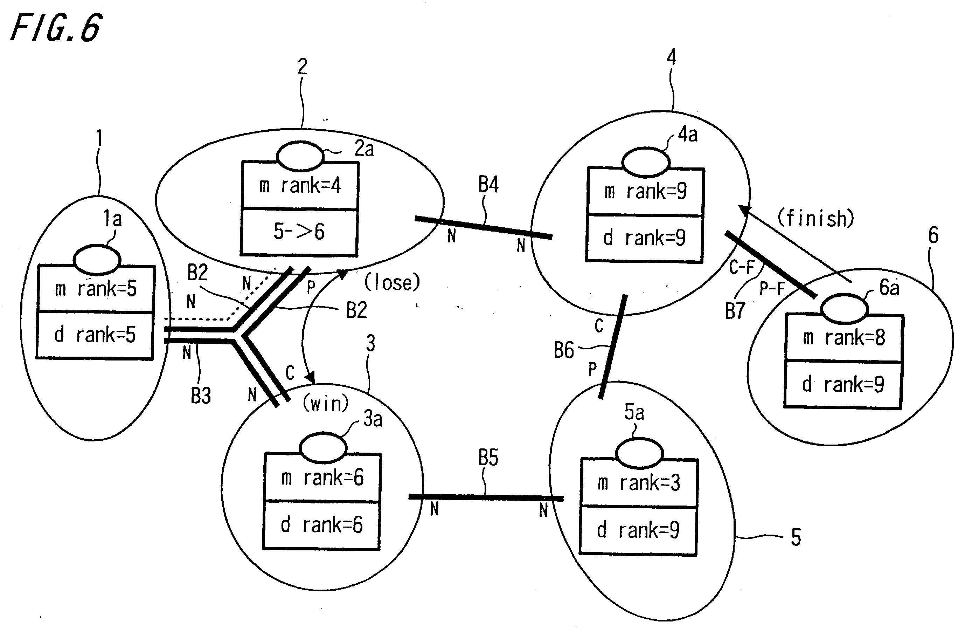

At the state shown in FIG. 6 which is the next step, Duel process between the sub-network manager 2a and the sub-network manager 3a is executed, and the sub-network manager 3a is higher in Duel level, and hence this sub-network manager 3a wins, and Child (C) is set as status. At the losing side sub-network manager 2a, Parent (P) is set. The Duel level value 5 of the losing side sub-network manager 2a at this time is updated to the Duel level value 6 of the winning side sub-network manager 3a. At this time, in the sub-network manager 2a, the status in relation to the sub-network manager 1a is returned to the status of NoDuel (N).

In the state shown in FIG. 6, since there is only one sub-network connected to the sub-network 6, Finish command is transmitted to the sub-network manager 4a of this one sub-network 4, and the status of the sub-networks 4 and 6 connected with the bridge B7 is changed from Child (C) and Parent (P) to Child-Finish (C-F) and Parent-Finish (P-F), respectively.

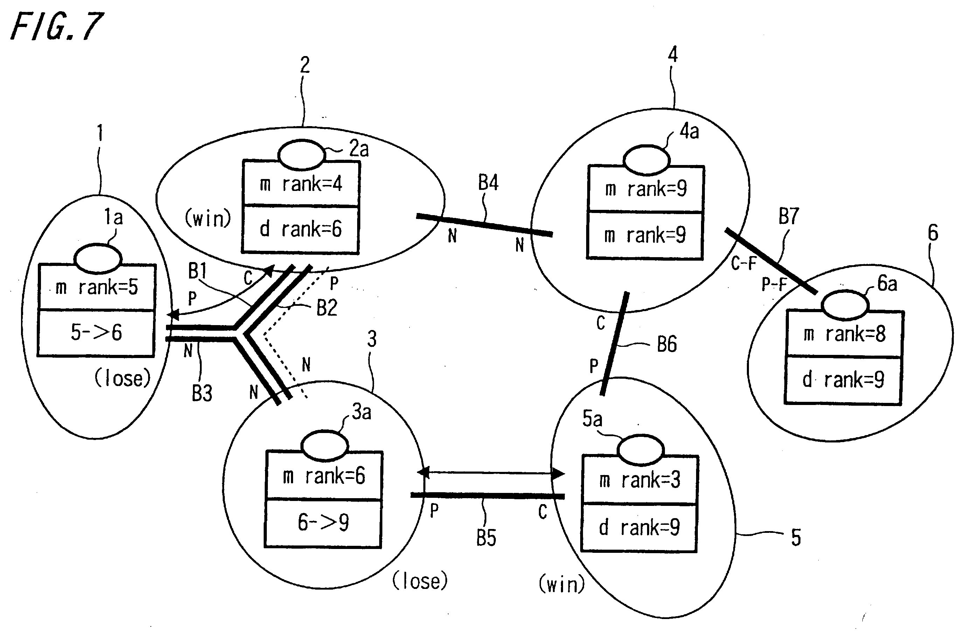

At the state shown in FIG. 7 which is the next step, Duel process between the sub-network manager 3a and the sub-network manager 5a is executed, and the sub-network manager 5a is higher in Duel level, and hence this sub-network manager 5a wins, and Child (C) is set as status. At the losing side sub-network manager 3a, Parent (P) is set. The Duel level value 6 of the losing side sub-network manager 3a at this time is updated to the Duel level value 9 of the winning side sub-network manager 5a. At this time, in the sub-network manager 3a, the status in relation to the sub-network manager 2a is returned to the status of NoDuel (N).

Also in the state shown in FIG. 7, Duel process is executed between the sub-network manager 2a returning to the status of NoDuel (N) and the sub-network manager 1a, and the sub-network manager 2a is higher in Duel level, and hence this sub-network manager 2a wins, and Child (C) is set as status. At the losing side sub-network manager 1a, Parent (P) is set. The Duel level value 5 of the losing side sub-network manager 1a at this time is updated to the Duel level value 6 of the winning side sub-network manager 2a.

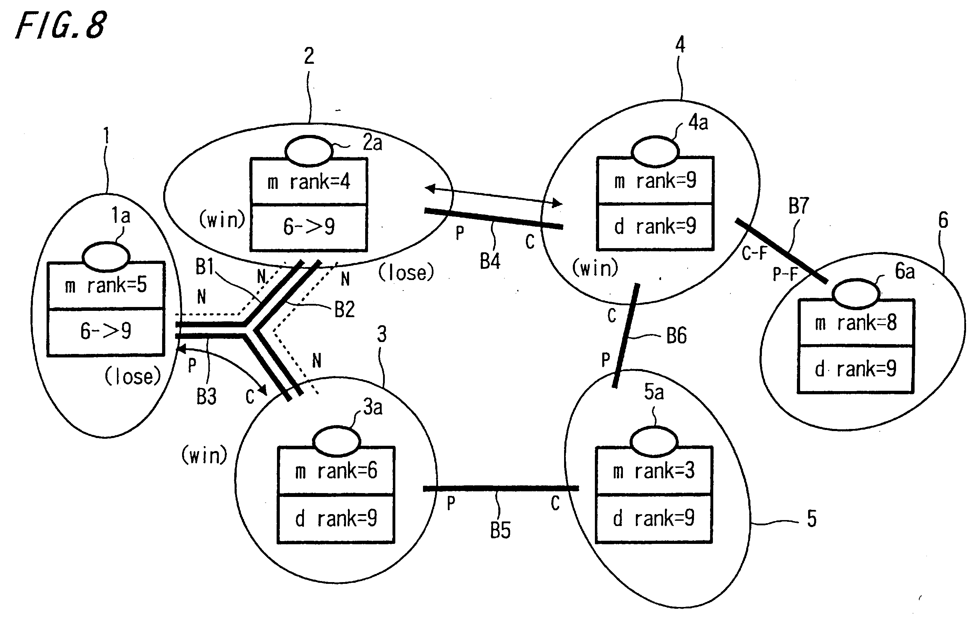

At the state shown in FIG. 8 which the next step, Duel process between the sub-network manager 1a and the sub-network manager 3a is executed, and the sub-network manager 3a is higher in Duel level, and hence this sub-network manager 3a wins, and Child (C) is set as status. At the losing side sub-network manager 1a, Parent (P) is set. The Duel level value 6 of the losing side sub-network manager 1a at this time is updated to the Duel level value 9 of the winning side sub-network manager 3a. At this time, in the sub-network manager 1a, the status in relation to the sub-network manager 2a is returned to the status of NoDuel (N).

Also in the state shown in FIG. 8, Duel process between the sub-network manager 2a and sub-network manager 4a is executed, and the sub-network manager 2a is higher in Duel level, and hence this sub-network manager 2a wins, and Child (C) is set as status. At the losing side sub-network manager 1a, Parent (P) is set. The Duel level value 6 of the losing side sub-network manager 1a at this time is updated to the Duel level value 9 of the winning side sub-network manager 2a.

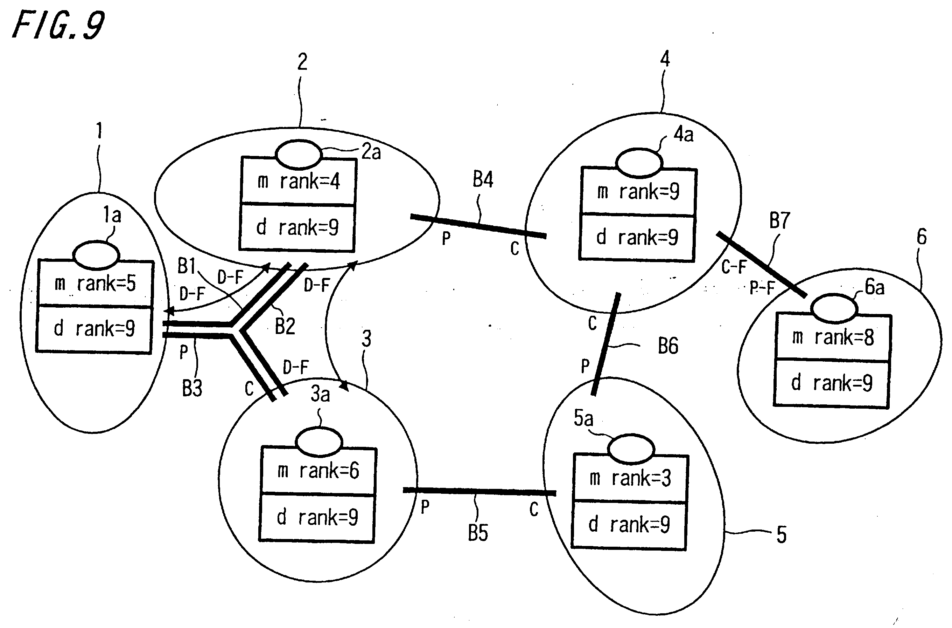

At the state shown in FIG. 9 which is the next step, Duel process between the sub-network manager 1a and the sub-network manager 2a is executed, and it is drawn as the both Duel levels are the same, and Draw-Finish (D-F) is set as each status. Also, Duel process between the sub-network manager 2a and the sub-network manager 3a is executed, and it is drawn as the both Duel levels are also the same, and Draw-Finish (D-F) is set as each status.

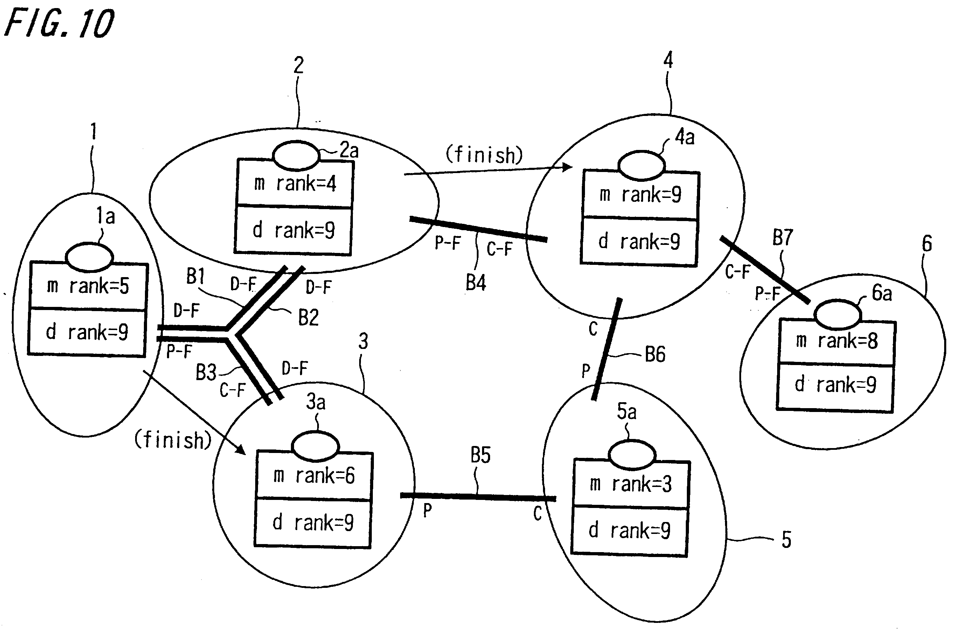

At the state shown in FIG. 10 which is the next step, the status of the bridge B3 of the sub-network manager 1a is Parent (P) at the preceding step, and the other remaining status (bridge B1) is Draw-Finish (D-F), and therefore the status of Parent (P) is changed to Parent-Finish (P-F), and Finish command is transmitted to the sub-network manager 3a connected with the changed bridge B3. At the side of the sub-network manager 3a receiving this Finish command, the status of the bridge B3 is changed from Child (C) to Child-Finish (C-F).

Also in the state shown in FIG. 10, the status of the bridge B4 of the sub-network manager 2a is Parent (P) at the preceding step, and the other remaining states (bridges B1, B2) are Draw-Finish (D-F), and therefore the status of Parent (P) is changed to Parent-Finish (P-F), and Finish command is transmitted to the sub-network manager 4a connected with the changed bridge B4. At the side of the sub-network manager 4a receiving this Finish command, the status of the bridge B4 is changed from Child (C) to Child-Finish (C-F).

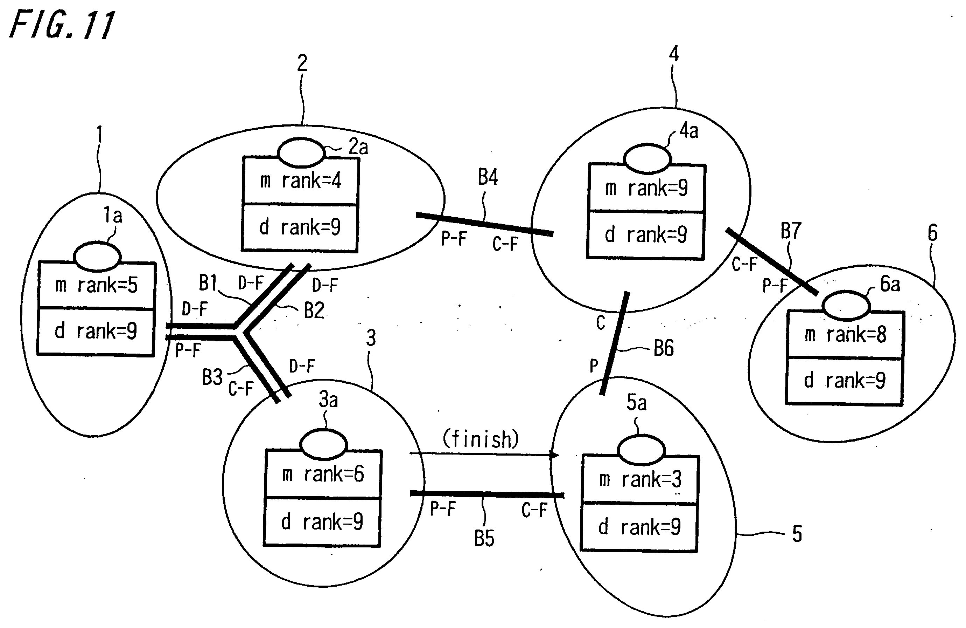

At the state shown in FIG. 11 which is the next step, the sub-network manager 3a receiving Finish command at the preceding step transmits Finish command to the sub-network manager 5a connected with the bridge B5, and the status of the bridge B5 of the sub-network manager 3a is changed from Parent (P) to Parent-Finish (P-F). Receiving this Finish command, at the sub-network manager 5a side, the status of the bridge B5 is changed from Child (C) to Child-Finish (C-F).

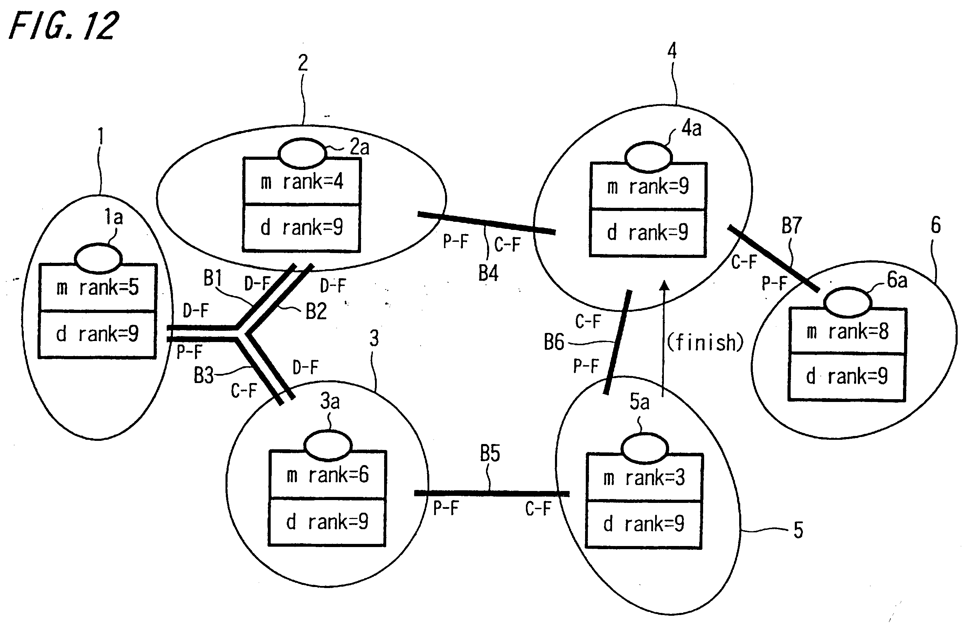

At the state shown in FIG. 12 which is the next step, the sub-network manager 5a receiving Finish command at the preceding step transmits Finish command to the sub-network manager 4a connected with the bridge B6, and the status of the bridge B5 of the sub-network manager 4a is changed from Parent (P) to Parent-Finish (P-F). Receiving this Finish command, at the sub-network manager 4a side, the status of the bridge B6 is changed from Child (C) to Child-Finish (C-F).

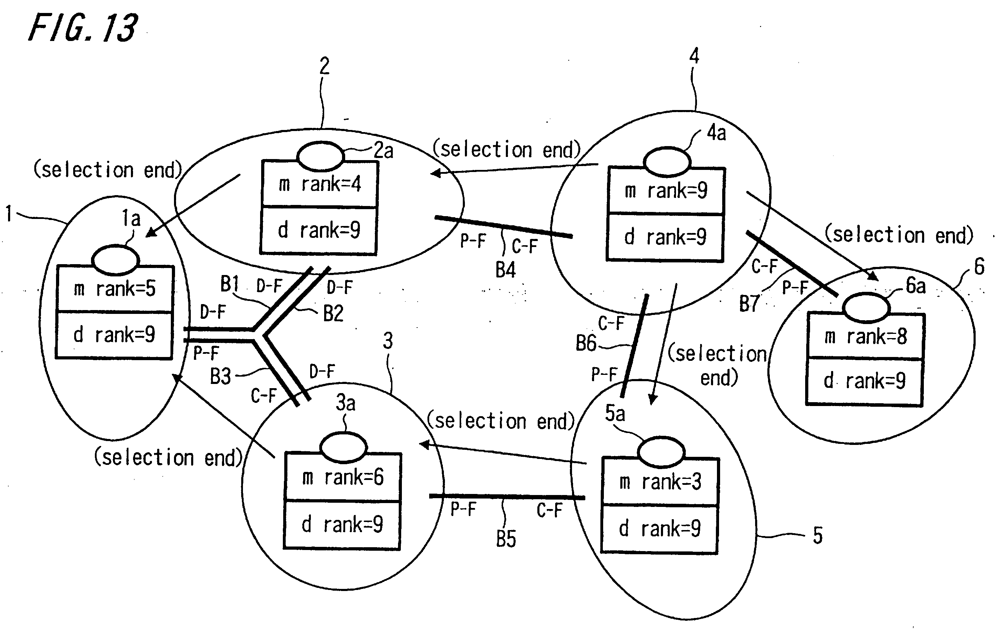

At the state shown in FIG. 13 which is the next step, since the status of each of the bridges B4, B6, B7 connected to the sub-network manager 4a is all Child-Finish (C-F), this sub-network manager 4a is selected as the network manager. SelectionEnd command is transmitted to the adjacent sub-network managers 2a, 5a, 6a connected with this sub-network manager 4a through the bridges B4, B6, B7. Receiving this SelectionEnd command, at the sub-network managers 2a, 5a, 6a, when the status of the adjacent sub-network manager is Child-Finish (C-F), SelectionEnd command is transmitted to the adjacent sub-network command, and similarly SelectionEnd command is transmitted sequentially, and SelectionEnd command is sent to all sub-networks in the network.

The network manager selected in such a procedure manages data transmission within the network. More specifically, for example, the ID is assigned to each sub-network and bridge, the transmission path for data transmission is set, cycle transmission is set and so on.

By thus selecting the network manager according to the flowchart in FIG. 3, selection is processed sequentially in the steps shown in FIG. 4 to FIG. 13, and the sub-network manager of the highest manager capability (in this case, the sub-network manager 4a) is automatically selected as the network manager. Herein, values of manager capability of sub-network managers are changed, and it is shown to select according to the manager capability value, but when the manager capabilities are identical, winning or losing is determined by comparing by a specific processing by using the EUI which is the intrinsic identification data of each sub-network manager, and therefore the same sub-network manager is always selected as the network manager even if sub-network managers having the same manager capability are present in the network. Therefore, for example, if the bridge in the network is broken due to some cause, and it is necessary to select the network manager again, the same sub-network manager is always selected, and hence the management state of the network is not changed due to change of network manager.

In the foregoing embodiment, in the network system of IEEE 1394 interface having nodes connected by bus lines using signal lines, the network manager is selected, and the network system is managed by the selected network manager, but it is equally applied in other network system having similar sub-networks for selecting the network manager and managing the network system by using the selected network manager. For example, in a network system of radio communication among respective nodes, it is applied to the case where the network manager is selected from the sub-network managers in the network system.

### DESCRIPTION OF REFERENCE NUMERALS

1-6 ... SUB-NETWORK
1a-6a ... SUB-NETWORK MANAGER
10 ... TRANSMISSION DEVICE
11 ... INPUT TERMINAL
12 ... OUTPUT TERMINAL
13 ... DATA INPUT AND OUTPUT INTERFACE
14 ... DATA PROCESSOR
15 ... TRANSMITTER
16 ... RECEIVER
17 ... CONTROLLER
18 ... RAM
19 ... PARAMETER MEMORY UNIT
20 ... ID MEMORY UNIT
100 ... NETWORK SYSTEM
110 ... SUB-NETWORK
111-113 ... BUS
114, 115 ... FIRST BRIDGE
120 ... SUB-NETWORK
121-123 ... BUS
124, 125 ... FIRST BRIDGE
130 ... SUB-NETWORK
131, 132 ... BUS
133 ... FIRST BRIDGE
140 ... SUB-NETWORK
141-143 ... BUS
144, 144 ... FIRST BRIDGE
150 ... SUB-NETWORK
151, 152 ... BUS
153 ... FIRST BRIDGE
161-164 ... SECOND BRIDGE
B1-B7 ... BRIDGE

## Claims

1. A network managing method for managing a network system composed by connecting buses having at least one node connected with a first bridge to form a sub-network, and connecting plural sub-networks with a second bridge,
wherein a network manager selected from sub-network managers specified in each of said sub-networks at least manages to assign each sub-network with an address and manages to set communication path between respective sub-networks.

2. A network managing method of claim 1,
wherein the network manager is one highest in the manager capability among said sub-network managers.

3. A network managing method of claim 1,
wherein each sub-network manager has a parameter showing its own manager capability, and identification data intrinsic to an appliance for composing the manager.

4. A network managing method of claim 2,
wherein a process for selecting the one having the highest manager capability is to select one highest in the capability by comparing parameters showing own manager capabilities possessed by respective sub-network managers.

5. A network managing method of claim 4,
wherein one sub-network manager is selected as a network manager by comparing the identification data intrinsic to each appliance in a specified state when the parameters showing the manager capability are identical.

6. A network managing method of claim 1,
wherein management by said network manager is to select a sub-network manager highest in the capability as the network manager in communication between adjacent sub-networks.

7. A network managing method of claim 1,
wherein a parameter showing the own manager capability and identification data intrinsic to the appliance for composing the manager are transmitted between adjacent sub-network managers.

8. A network managing method of claim 7,
wherein one sub-network manager is selected by comparing between two sub-network managers in transmission of said parameters and identification data between adjacent sub-network managers,
other sub-network manager not selected inherits parameter and identification data from the selected sub-network manager, and
a subsequent comparison of adjacent sub-network parameters is performed based on the inherited data used as its own parameter and identification data.

9. A network managing method of claim 7,
wherein one sub-network manager is selected as a parent by comparing between two sub-network managers in transmission of said parameters and identification data between adjacent sub-network managers, and
other sub-network manager not selected is regarded as a child.

10. A network managing method of claim 9,
wherein if capability parameters and identification data of both sub-network managers are identical in said comparison, the data are assumed to be inherited from the same parent sub-network manager, and the parent-child relation is disregarded.

11. A network managing method of claim 10,
wherein if a relation with one adjacent sub-network manager is parent, and there is no other adjacent sub-network manager, an end command is transmitted to the parent sub-network manager.

12. A network managing method of claim 10,
wherein if a relation with one adjacent sub-network manager is parent, and a relation with the remaining adjacent sub-network manager is indifferent to parent-child relation or child, and an end command is received from all children, an end command is transmitted to the parent sub-network manager.

13. A network managing method of claim 10,
wherein if a relation with all adjacent sub-network managers is indifferent to parent-child relation or child, and an end command is received from all children, an own sub-network manager is judged to be a network manager.

14. A network managing method of claim 7, comprising:
a first command for sending out a capacity parameter and intrinsic identification data as a communication command in transmission between adjacent sub-network managers, and demanding 1:1 comparison with an adjacent sub-network manager, and
a second command for comparing in response to said first command, and reporting its result.

15. A network managing method of claim 14,
wherein, in case of having said first command and second command, it is judged whether the second command is valid or not by setting a specified counter value and comparing between both sub-network managers of the set value.

16. A network managing method of claim 13,
wherein a sub-network manager judging itself to be a network manager transmits a selection end command indicating selected as a network manager to all adjacent sub-networks, and
a sub-network managers receiving the data indicating selection as the network manager transmits a selection end command to all adjacent child sub-network managers.

17. A selecting method of network manager for selecting a network manager for managing an entire network system, in a network system composed by connecting buses having at least one node connected with a first bridge to form a net-network, and connecting plural sub-networks with a second bridge,
wherein said network manager is selected from sub-network managers specified in each one of said sub-networks by a specified process.

18. A selecting method of network manager of claim 17,
wherein the network manager selects one highest in the manager capability among said sub-network managers.

19. A selecting method of network manager of claim 17,
wherein each sub-network manager has a parameter showing its own manager capability, and identification data intrinsic to an appliance for composing the manager, and select a network manager according to the parameter and identification data.

20. A selecting method of network manager of claim 18,
wherein a process for selecting the one having the highest manager capability is to select one highest in the capability by comparing the parameters showing own manager capabilities possessed by each sub-network manager.

21. A selecting method of network manager of claim 20,
wherein one sub-network manager is selected as a network manager by comparing identification data intrinsic to each appliance in a specified state when the parameters showing the manager capability are identical.

22. A selecting method of network manager of claim 17,
wherein a network manager is selected by judging a sub-network manager of the highest capability in communication between adjacent sub-networks.

23. A selecting method of network manager of claim 17, wherein a parameter showing an own manager capability and identification data intrinsic to an appliance for composing the manager are transmitted between adjacent sub-network managers, and a sub-network manager appropriate as a network manager is selected.

24. A selecting method of network manager of claim 23,
wherein one sub-network manager is selected by comparing between two sub-network managers in transmission of said parameters and identification data between adjacent sub-network managers,
other sub-network manager not selected inherits parameter and identification data from the selected sub-network manager, and
a subsequent comparison of adjacent sub-network managers is based on the inherited data used as own parameter and identification data.

25. A selecting method of network manager of claim 23,
wherein one sub-network manager is selected as a parent by comparing between two sub-network managers in transmission of said parameters and identification data between adjacent sub-network managers, and
other sub-network manager not selected is regarded as a child.

26. A selecting method of network manager of claim 25,
wherein if capability parameters and identification data of both sub-network managers are identical in said comparison, data are assumed to be inherited from the same parent sub-network manager, and the parent-child relation is disregarded.

27. A selecting method of network manager of claim 26,
wherein if a relation with one adjacent sub-network manager is parent, and there is no other adjacent sub-network manager, an end command is transmitted to a parent sub-network manager.

28. A selecting method of network manager of claim 26,
wherein if a relation with one adjacent sub-network manager is parent, and a relation with the remaining adjacent sub-network manager is indifferent to parent-child relation or child, and an end command is received from all children, an end command is transmitted to the parent sub-network manager.

29. A selecting method of network manager of claim 26,
wherein if a relation with all adjacent sub-network managers is indifferent to parent-child relation or child, and an end command is received from all children, an own sub-network manager is selected to be a network manager.
